# EUROPEAN PATENT APPLICATION

(11) **EP 4 131 010 A1**
(43) Date of publication of application: **08.02.2023**
(21) Application number: 22162308.5
(22) Date of filing: 15.03.2022
(51) Int. Cl.: G06F 11/36, G06N 20/00

(54) **METHOD AND SYSTEM FOR PERFORMING HUMAN MACHINE INTERFACE (HMI) AUTOMATION TESTING**

(30) Priority: 06.08.2021 IN 202141035526
(71) Applicant: L & T Technology Services Limited, Chennai 600089 (IN)
(72) Inventor: Motwani, Ashish, 400705 Navi Mumbai (IN); Gawde, Neha Vidhyadhar, 400605 Thane (IN)
(74) Representative: Studio Torta S.p.A.

(57) **Abstract**

A method of performing Human Machine Interface (HMI) automation testing is disclosed. The method includes receiving at least one input image and detecting one or more of User Interface (UI) elements and corresponding graphical attributes of each of the one or more of UI elements in the at least one image using a trained machine learning model. The graphical attributes comprise at least one of an appearance and a placement of each of the one or more of UI elements. Further, the method includes analyzing each of the graphical attributes detected by the trained machine learning model with reference attributes stored in and generating an output image annotated with a validity score for each of the User Interface (UI) elements appearing on the HMI screen. The trained machine learning model is created by iterative training with a set of training images based on a learning score.

## Description

### TECHNICAL FIELD

This disclosure relates generally to automation testing, and more particularly to Human Machine Interface (HMI) automation testing using machine learning (ML)-based technique.

### BACKGROUND OF THE INVENTION

In today's dynamic times rapid growth of user interface operations in transportation vehicles such as in infotainment system or mobile devices or SET top box or other electronic devices with user interfaces require extensive program development. During program development, there are constant efforts to make user experience as streamlined as possible by showing more appealing visuals. Hence, user interfaces (for example, Human Machine Interface (HMI) screens) are constantly updated during the program development especially in the early phases of development. Yet, testing such HMI screens can be an exhausting task as testing requires determining all minute HMI defects with regular functionality fixes or feature implementation.

### SUMMARY OF THE INVENTION

The following presents a simplified summary to provide a basic understanding of some aspects of the disclosed HMI automation testing. This summary is not an extensive overview and is intended to neither identify key or critical elements nor delineate the scope of such elements. Its purpose is to present some concepts of the described features in a simplified form as a prelude to the more detailed description that is presented later.

Various example embodiments described herein relate to a method of performing a Human Machine Interface (HMI) testing. The method includes receiving a set of images and detecting one or more of User Interface (UI) elements and corresponding graphical attributes of each of the one or more of UI elements in the set of images using a trained machine learning model. The graphical attributes comprise at least one of an appearance and a placement of each of the one or more of UI elements. Further, the method includes analyzing each of the graphical attributes detected by the trained machine learning model with reference attributes stored in and generating an output image annotated with a validity score for each of the User Interface (UI) elements appearing on the HMI screen. The validity score is indicative of a closeness of User Interface (UI) elements detected in the output images to the User Interface (UI) elements of the set of input images. The trained machine learning model is created by iterative training with a set of training images and test images, wherein a number of training iteration is based on a learning score indicative of valid recognitions of the one or more UI elements and the corresponding graphical attributes.

Various example embodiments described herein relate to a method of performing the Human Machine Interface (HMI) testing, wherein the graphical attributes are detected by the object detection machine learning model and text attributes are detected by the OCR machine learning model.

Various example embodiments described herein relate to a method of performing the Human Machine Interface (HMI) testing. The method includes detecting texts in the first language associated with the set of input images and the text in the second language associated with a set of training using the trained OCR machine learning model.

Various example embodiments described herein relate to a method of performing the Human Machine Interface (HMI) testing. The method includes executing an autocalibration mode to analyze a new image or a failed image distinct from the set of input images provided to the machine learning model for the HMI testing; and training, by the machine learning processor 101, the machine learning model with the new image or the failed image.

Various example embodiments described herein relate to a method of performing the Human Machine Interface (HMI) testing. The method includes analyzing a set of failed images and classifying the error according to the rules set by the rule set block, wherein the rule set block comprises rules such as synonymous of text, missing UI element icon, text missing of UI element, corrupt image, change in position, change in UI element structure.

Various example embodiments described herein relate to a method of performing the Human Machine Interface (HMI) testing. The method includes receiving additional inputs from the execution input block, wherein the execution input block 104 specifies an execution type comprising one of a functional type, a legacy type, a theme-dependent type, a theme-independent type, validation type including status bar validation, language type, or release region.

Various example embodiments described herein relate to a method of performing the Human Machine Interface (HMI) testing, wherein the learning score is indicative of a learning loss encountered when training the machine learning model.

Various example embodiments described herein relate to a method of performing the Human Machine Interface (HMI) testing. The method includes training the machine learning model iteratively until the learning loss is less than the benchmark value, wherein the learning loss is less than the benchmark value indicates at least one of a high learning score or end of the training.

Various example embodiments described herein relate to a method of performing the Human Machine Interface (HMI) testing. The method includes creating a tensor flow record by segregating and labelling the set of training images.

Various example embodiments described herein relate to a method of performing the Human Machine Interface (HMI) testing, wherein the set of input images or the set of testing and training images comprises one or more two-dimensional images or one or more three-dimensional images, or a combination thereof.

Various example embodiments described herein relate to a computing device with a machine learning processor is disposed in the computing device and communicably coupled to a memory, a trained machine learning model and a dataset storage, wherein the machine learning processor is configured to: receive at least one input image, wherein the at least one input image is indicative of an (Human Machine Interface) HMI screen and detect at least one User Interface (UI) element and a corresponding graphical attribute using the trained machine learning model, wherein the graphical attribute comprises a placement coordinate of the at least one UI element. Further, the processor is configured to analyze the graphical attribute detected by the trained machine learning model with a reference attribute stored in the memory, wherein in response to the analysis: generate an output image annotated with a validity score for the User Interface (UI) element appearing on the HMI screen, wherein the validity score is indicative of a closeness of User Interface (UI) element detected in the output image to the User Interface (UI) element of the at least one input image. Further, the trained machine learning model is created by iterative training with a set of training images from the dataset storage, wherein a number of training iteration is based on a learning score, wherein the learning score is indicative of a learning loss encountered during the iterative training. Various example embodiments described herein relate to the computing device, wherein the trained machine learning model is one of an object detection machine learning model and an Optical character Recognition (OCR) machine learning model.

Various example embodiments described herein relate to the computing device, wherein the graphical attributes are detected by the object detection machine learning model and text attributes are detected by the OCR machine learning model.

Various example embodiments described herein relate to the computing device, wherein the machine learning processor 101 is further configured to: train the machine learning model iteratively until the learning loss is less than the benchmark value, wherein the learning loss is less than the benchmark value indicates at least one of a high learning score or end of the training.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which will be further described below.

### BRIEF DESCRIPTION OF THE DRAWINGS

The accompanying drawings, which are incorporated in and constitute a part of this disclosure, illustrate exemplary embodiments and, together with the description, explain the disclosed principles.
**FIG.1** illustrates a block diagram of a high-level Human Machine Interface (HMI) validation framework for performing HMI automation testing, in accordance with an embodiment of the present disclosure.
**FIG.2** illustrates a high-level design of an object detection module of a HMI validation framework, in accordance with some embodiments of the present disclosure.
**FIG.3** illustrates a low-level design of an object detection module of a HMI validation framework, in accordance with an embodiment of the present disclosure.
**FIG.4** illustrates an exemplary deployment of an object detection module for performing HMI automation testing, in accordance with an embodiment of the present disclosure.
**FIGS. 5A** **and** **5B** illustrates an exemplary HTML test report after performing HMI automation testing, in accordance with an embodiment of the present disclosure.
**FIG. 6** illustrates an example of a test execution while training the machine learning model using the tensor flow records, in accordance with an embodiment of the present disclosure.
**FIG.7** is a flowchart of a method for performing HMI automation testing, in accordance with an embodiment of the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims. Additional illustrative embodiments are listed below.

Various embodiments of the present invention now will be described more fully hereinafter with reference to the accompanying drawings, in which some, but not all embodiments of the invention are shown. Indeed, the invention may be embodied in many different forms and should not be construed as limited to the embodiments set forth herein. Rather, these embodiments are provided so that this disclosure will satisfy applicable legal requirements. The term "or" is used herein in both the alternative and conjunctive sense, unless otherwise indicated. The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

Although aspects of some embodiments described in the disclosure will focus, for the purpose of illustration, on particular examples of machine learning models, output predictions, and training data, the examples are illustrative only and are not intended to be limiting. Various aspects of the disclosure will now be described with regard to certain examples and embodiments, which are intended to illustrate but not limit the disclosure.

Throughout this specification, the terms 'machine learning' or 'deep learning' or 'ML' or 'DL' may be used interchangeably, and these terms shall not be taken in a sense to limit the scope of the present disclosure.

Throughout this specification, the term 'machine learning model' or 'deep learning model' or 'ML model' or 'DL model' may be used interchangeably, and these terms shall not be taken in a sense to limit the scope of the present disclosure. Further, the term 'machine learning model' or 'deep learning model' may refer to a model which is trained or is subject to training by the machine learning processor. Further the term 'trained machine learning model' may refer to a model which is trained and ready to be used in the HMI testing, and these terms shall not be taken in a sense to limit the scope of the present disclosure.

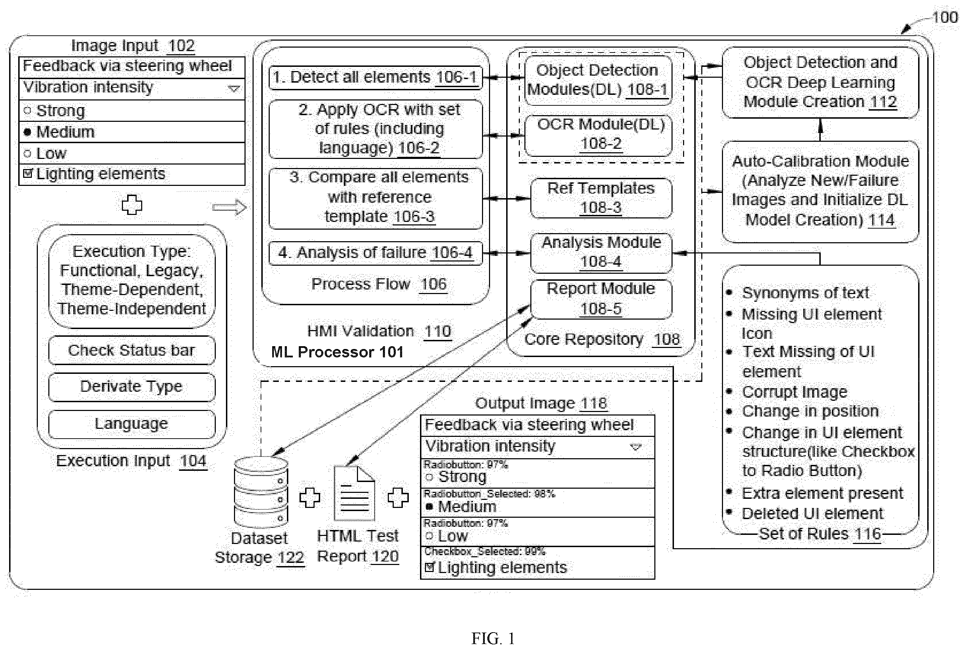

Throughout this specification, examples of the HMI testing are provided for screen appearing in the infotainment device used in a vehicle. However, such examples are used for explaining the one or more embodiments for the purpose of understanding the present disclosure and not for purposes of limitation. A person skilled in the art will understand that the embodiments described may be well suited for any HMI screen with graphical attributes used in any application in any electronic device. Therefore, the examples mentioned throughout the specification shall not be taken in a sense to limit the scope of the present disclosure. Typically, the HMI screens on the infotainment device in a vehicle allows communication between humans and a 'smart' machine. However, under development stage, the infotainment device may undergo multiple changes to develop the device that provides smooth customer experience and attractive visuals. Due to constant changes in development stage of the infotainment device, it is challenging to find all minute HMI defects in the device along with performing regular functionality fixes or feature implementation. In addition, in scenarios where automation is used to save execution efforts on testing the HMI screens, one of a biggest challenge is to analyze automation execution report every day, update HMI reference dataset as per new software build changes, which proves to be time consuming Further, current automation solutions may provide false positive error or false negative errors when performing the testing using techniques like pixel-to-pixel image comparison or template matching. Referring now to FIG. 1, a high-level HMI validation framework is illustrated in accordance with an embodiment of the present disclosure. The validation framework may include a computing device 100 with a machine learning processor 101 and a memory comprising one or more repositories. The machine learning processor 101 may be communicably coupled to the memory. The machine learning processor 101, for example, may be used to train and process data of a machine learning model. According to an embodiment, the machine learning model may be a convolutional neural network ("CNN") model which is a type of artificial neural network that is commonly used for image analysis. According to another embodiment, the machine learning model may be supervised, semi-supervised, unsupervised and reinforcement type machine learning model.

In some examples, the machine learning processor 101 may be a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, or microcontroller, combinations of the same, or the like. A processor can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor may also include primarily analog components. For example, any of the signal processing algorithms described herein may be implemented in analog circuitry. In some embodiments, a processor can be a graphics processing unit (GPU). The machine learning processor 101 may include capabilities to reduce the amount of time for training and using neural networks (and other machine learning models). In some embodiments, a processor can be an ASIC including dedicated machine learning circuitry custom-build for training the machine learning model.

In some examples, the memory may represent any type of non-transitory computer readable medium such as random-access memory (RAM), read only memory (ROM), magnetic disk or tape, optical disk, flash memory, or holographic memory. In one embodiment, the memory comprises a combination of random-access memory and read only memory. In some embodiments, the processor and memory may be combined in a single chip. As shown in the example embodiment of FIG. 1, the computing device includes an image input block 102, an execution input block 104, a process flow block 106 and an HMI validation module 110 comprising the steps executed by the machine learning processor 101, a core repository module 108 implemented as a part of the memory for storing images and related data, an object detection modules (DL) 108-1, an OCR module (DL) 108-2 , an object detection and OCR machine learning module creation module 112 to create a trained machine learning model using the machine learning processor 101, an auto-calibration module 114, a rule set block 116, an output image block 118, an HTML test report 120, and a dataset storage 122. According to an embodiment, the object detection and OCR machine learning (ML) creation module 112 may receive input from the data storage 122. In addition, the object detection and OCR deep learning module creation module 112 may send data to the object detection module 108-1 for participating in the process flow 106. In an embodiment, the auto-calibration module 114 may analyze new/failed images and initialize ML model creation by training the ML model with the new/failed images. These images may be distinct from the set of input images provided to the machine learning model for testing. Further, these images may be distinct from the set of training images and test images provided used for training the machine learning model. The auto-calibration module 114 may receive input from the data storage 122. Further, the rule set block 116 may include rules such as synonymous of text, missing UI element icon, text missing of UI element, corrupt image, change in position, change in UI element structure (like checkbox to radio button), presence of an extra element, deleted UI element(s), and so forth. The rule set block 116 may act as an input to the analysis module 108-4. In some examples, the analysis module 108-4 may analyze the failed images and classify the error according to the rules set by the rule set block 116.

According to an embodiment, for performing HMI validation, at least one input image from the image input block 102 may be received or fetched by the machine learning processor 101. In some examples, the execution input block 104 may provide additional inputs to the machine learning processor 101. The at least one image may be an HMI screen of an electronic device. In the example as shown in FIG. 1, the at least one image is an image of the HMI screen from an infotainment device used in a vehicle. The at least one image of the image input block 102 may include one or more UI elements, for example, feedback via a steering wheel and include components such as vibration intensity. The component vibration intensity may include parameters such as strong, medium, low, lighting elements and so forth. Each of the UI element may include an associate graphical attribute. The graphical attribute is indicative of at least one of an appearance and a placement of each of the one or more of UI elements. For example, the appearance may include color, theme, size of the radio button or check box, etc. For example, any attribute in the HMI screen which enhances the look and feel of the one or more UI elements may be considered as a graphical attribute. For example, the placement may specify a position (i.e., 2D or 3D coordinates) of the UI element on the HIM screen. For example, the position (i.e., the 2D or 3D coordinates) of the radio button or the check box or the text with respect to the check box. Further, the execution input block 104 may include an execution type that can include a functional type, a legacy type, a theme-dependent type, or a theme-independent type, depending on the testing needs. Further, the execution input 114 may also specify whether status bar needs to be validated, the language or region where the model is to be released. For example, the execution input 114 may specify the machine learning processor 101 to consider the status bar while running a test script using the machine learning model. In some scenarios, when there is no specification from the execution input 114, the machine learning processor 101 may skip processing the status bar considering only the main window with radio buttons and check boxes.

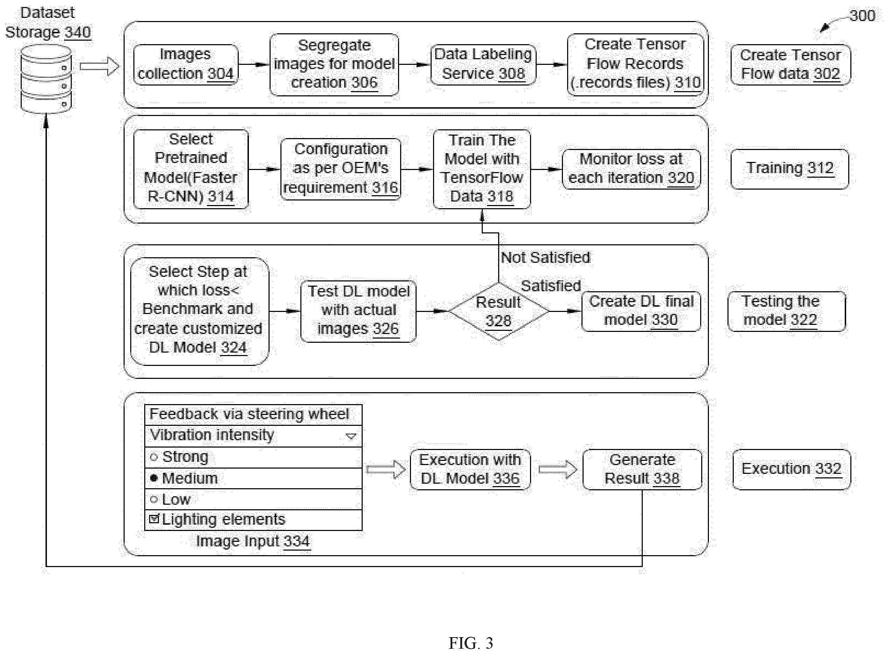

Upon receiving the at least one image from the input block 102 and optionally receiving the execution input 104, the machine learning processor 101 may execute the test scripts to perform the steps mentioned in process flow block 106 which includes detection of UI elements at 106-1, application of OCR with set of rules (includes multiple languages) 106-2, comparison of elements with reference template 106-3 and analysis of failure at 106-4. The core repository module 108 incudes the object detection modules (DL) 108-1, the OCR module (DL) 108-2, reference templates 108-3, analysis module 108-4, report module 108-5. For example, the object detection modules (DL) 108-1 and the OCR module (DL) 108-2 are the machine learning models created by the machine learning processor 101 by utilizing the architecture as shown in FIG. 3.

According to an embodiment, the image from input block is processed by the machine learning processor 101 using the machine learning models trained by the processor using the architecture as shown in FIG. 3. The one or more of User Interface (UI) elements and corresponding graphical attributes of each of the one or more of UI elements are detected using the trained machine learning model. As discussed previously. The graphical attributes comprise the appearance and the placement of each of the one or more of UI elements. For example, the processor may detect the UI elements using the coordinate information of each of the UI element on the HMI screen. For example, as shown in FIG. 3, when the UI element is round, then the machine learning model may detect that round to be "radio button" and when the UI element is square, then the machine learning model may detect that square to be "check box". For example, when the round is filled or when the check box is filled, then the machine learning model may detect that the radio button or check box is selected. In some examples, the machine learning model may receive color or theme dependent inputs from execution input 104. The machine learning model may then detect the radio button with a specific background color. According to an embodiment, the machine learning processor 101 may analyze each of the graphical attributes detected by the trained machine learning model with reference attributes stored in a memory in the reference templates 108-3 to validate the HMI screen and the one or more UI elements associated with the HMI screen. For example, the reference templates may be in the form an image or a .xlsx file which specifies reference conditions. For example, the reference conditions may be specified for each UI element. For example, the reference condition may specify "UI element- radio button state"- conditions: 1. Strong: Selected; 2. Medium: Unselected; 3. Low: Selected and "UI element- Drop-down option"- condition: 1. Vibration intensity: Unselected. Likewise, each UI element may have specified set of reference conditions. In this regard, the machine learning model may check the validity of the each of the graphical attributes by comparing it with the reference attributes.

According to an embodiment, the machine learning processor 101 may generate an output image annotated with a validity score for each of the User Interface (UI) elements appearing on the HMI screen as a result of the analysis with the reference template the validity score is indicative of a closeness of User Interface (UI) elements detected in the output image with the User Interface (UI) elements of the at least one input image For example, a comparative matching of each of the UI elements with the reference template may generate the validity score to determine percentage accuracy when compared to the input image provided to the trained machine learning model. For example, the validity score may indicate the machine learning model's accuracy or precision in determining the UI elements and the associated attributes. For example, as shown in FIG. 1, the UI elements of the output image is annotated with the validity score provided in form of percentage. The "Strong" radio button was detected by the machine learning model with 97% accuracy. Further, "lighting elements" check box in the selected sate was detected by the machine learning model with 99% accuracy. Likewise, each UI element may be annotated with the validity score expressed in terms of a percentage valve indication the detection accuracy of the trained machine learning model.

According to an embodiment, the machine learning processor 101 may analyze text attribute for each UI elements on the HMI screen using an OCR machine learning model. Traditional OCR algorithms are based on pattern matching, pattern recognition, or image correlation. These techniques, in a standard use case such as a document scanner, can recognize words and sentences with a very high level of accuracy. However, in more challenging cases that include multiple font styles, camera motion blurring the image, or unclear human handwriting, the traditional OCR algorithms fall short and are gradually replaced by deep learning techniques Deep learning OCR models may be for example, a Convolutional-Recurrent Neural Network (CRNN), a Recurrent Attention Model (RAM) and Attention-OCR. For example, the OCR machine learning model may detect and interpret all words or letter provided in any font or format with the UI elements. For example, if the word "STRONG" is provided in Italics with a smaller or bigger font size and in All caps, then the machine learning model may detect the word to be "Strong" even if there is mismatch in the font or format. In some examples, as discussed previously, the output image may be provided with a validity score specific for the OCR closeness or accuracy. According to an embodiment, the validity scores are annotated on the output image based on both the UI elements closeness and the OCR closeness to the input image. In other words, the validity score is defined based on an accuracy of the graphical attributes and text attributes detected by the trained OCR machine learning model and the trained object detection machine learning model. In some examples, the text in the first language associated with the input image and the text in the second language associated with a training image is detected using the trained OCR model.

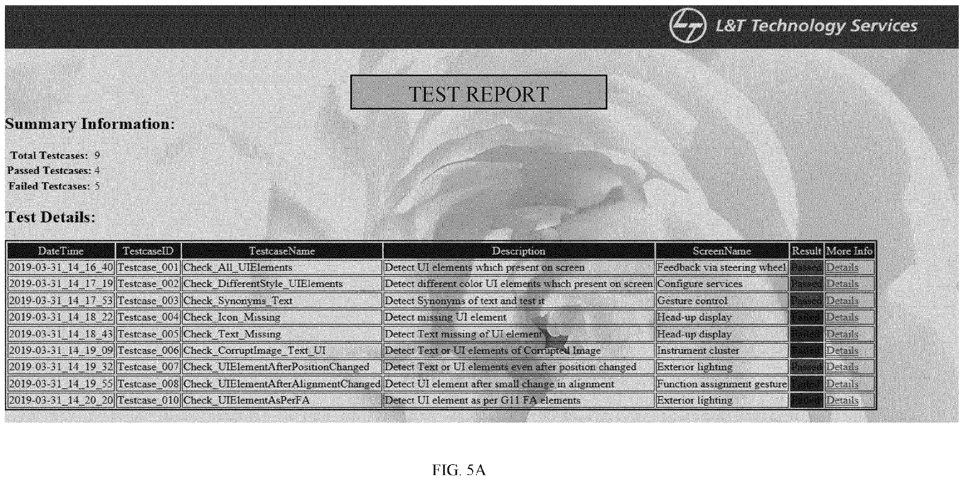

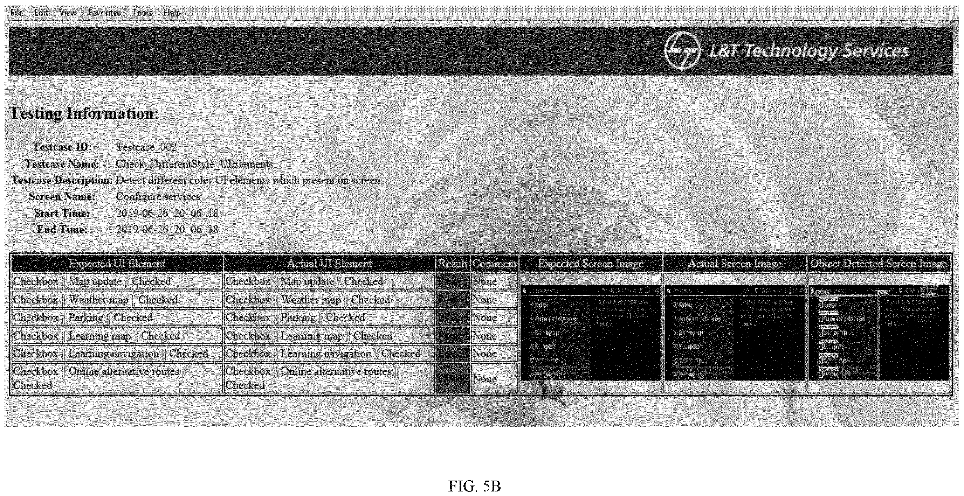

According to an embodiment, the machine learning processor 101 may generate an HTML report after performing the analysis with the reference template. The HTML report may provide the test results indicating whether the detection of the UI elements and associated graphical and/or text attributes by the machine learning models passed or failed. In addition, the output image as displayed in the FIG. 1 may be displayed in the HTML report. An example of the HTML test report is shown in FIGS. 5A and 5B, which provides the test results for HMI validation. FIG. 5A shows an example of the test summary report in the HTML format. The test summary report indicates the status of the testing performed on the images of the HMI screen. As shown in the FIG. 5A, the summary information includes total testcases, passed testcases and failed testcases. Below the summary information, the test details are provided in a table format. The test details provide information including the date/time of the test script execution, test case ID, test case name, description, screen name, test result, and a link to additional details. For example, the test name may be indicative of the validation test to be done on the HMI screen. For example, testcase_001 is indicates a test name "Check All UI elements". As discussed previously, the machine learning processor 101 may run the test scripts for the test named "Check All UI elements" to detect and analyze the input images using the trained machine learning model. The detection may include identifying one or more of User Interface (UI) elements and corresponding graphical attributes of each of the one or more of UI elements using the trained machine learning model. The graphical attributes comprise the appearance and the placement of each of the one or more of UI elements. Further, the analysis includes comparing each of the graphical attributes detected by the trained machine learning model with reference attributes stored in the memory. The result of the analysis is displayed in the "test result" column as shown in FIG. 5A. For example, the result may be either "Passed" or "Failed". For example, testcase_002 is indicates a test name "Check Different Style UI elements". As discussed previously, the machine learning processor 101 may run the test scripts for the test named "Check All UI elements" to detect and analyze the input images using the trained machine learning model. The trained machine learning model may be either the object detection ML model or the OCR ML model or a combination of both. The detection may include identifying one or more of User Interface (UI) elements and corresponding graphical attributes of each of the one or more of UI elements using the trained machine learning model. In the example, the graphical attributes may be different color/theme of UI elements and different styles of text of associated with the UI elements. Further, the analysis includes comparing each of the graphical attributes detected by the trained machine learning model with reference attributes stored in the memory. The result of the analysis is displayed in the "test result" column as shown in FIG. 5A. For example, the result may be either "Passed" or "Failed". For example, the result of testcase_002 is "Passed". As shown in FIG. 5A, the screen name to be tested in which the UI elements and the associated graphical attributes appear in provided in the "screen name" column.

In some examples, the test report may provide additional information on the tests executed by the trained machine learning model. For example, the link to additional details may pop up a new window or a HTML page which shows additional information of a specific testcase ID. As shown in FIG. 5B, the additional information of testcase_002 is provided along with the testcase name, testcase description and the screen name subjected to testing. FIG. 5B provides a list of UI elements which were detected and analyzed by the trained machine learning model in the table format. The table include columns indicating an excepted UI element, an actual UI element, the test result, an expected screen image, an actual screen image and the output image from the trained machine learning model. For example, the expected UI elements and attributes are stored as the reference attributes in the memory. The actual UI elements and attributes in the input mages are detected by the trained machine learning model and analyzed by comparing it with the reference attributes to validate the HMI screen. The HMI screen in the example as shown in FIG. 5B indicates "Configure services" screen. The output image may be from the trained machine learning model which includes the validity score. As discussed previously, the validity score is indicative of a closeness of User Interface (UI) elements detected in the output image with the User Interface (UI) elements of the input image. In other words, the validity score is indicative of a closeness of the actual UI element with the excepted UI element on the HMI screen. The extent of closeness between the actual UI element with the excepted UI element is indicative of an accuracy of the trained machine learning model. Such closeness may be achieved by iteratively training the machine learning models to create a robust machine learning model which can be readily deployed for validating the UI elements on the HMI screen.

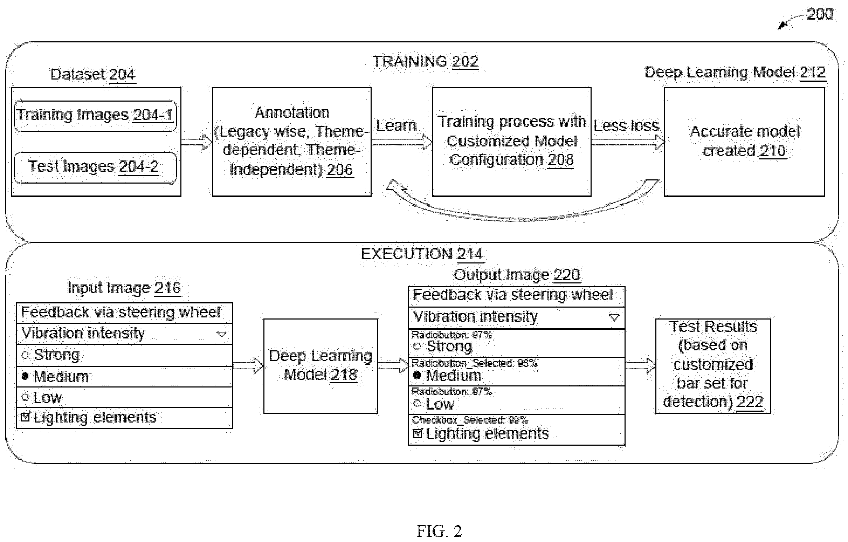

According to an embodiment, the machine learning models are created by iteratively training the machine learning models with a set of training images and/or text using the machine learning processor 101. The machine learning models are subjects to a number of training iteration based on a learning score indicative of valid recognitions of the one or more UI elements and the corresponding graphical attributes and/or text attributes. The high level and low level architectures using for iteratively training the machine learning models may be explained in conjunction with FIG. 2 and FIG. 3.

Referring to FIG. 2 a high level design 200 of an object detection module of an HMI Validation Framework is illustrated in accordance with some embodiments of the present disclosure. The object detection and OCR ML model creation module 112 includes a training module 202 and an execution module 214. These modules may include a set of software test scripts or programs executed by the machine learning processor 101. For example, the machine learning processor 101 may train a machine learning model, for example, the object detection model or the OCR model using the training module 202. For example, the machine learning processor 101 may execute the HMI validation with the trained machine learning model on live test cases using the execution module 214. It is understood by a person skilled in the art that the machine learning may be subjected to training before being deployed to test live HMI screens for the validating the UI elements. Such a training may be executed using a dataset 204. The dataset 204 includes a set of training images 204-1 and a set of test images 204-2. The images present in the dataset 204 may be annotated using an annotation block 206. The images may be annotated in execution types specified by the execution input block 104 such as legacy wise, theme dependent and theme independent. Further, the training with a customized model configuration may be performed by the machine leaning processor in which the model may be subjected to a learning process using the annotated images to create an accurate or robust model 210 which can be readily deployed in the HMI validation process. According to an embodiment, the created model may be considered as accurate or robust based on the learning score of the model. The learning score is indicative of a learning loss encountered when training the model. If it is identified that the model is subjected to less learning loss when training the model, then the learning score is high and such a model may be deployed in the HMI validation process. The model 210 may be trained recursively or iteratively through the training process at block 208. In some examples, the model may be trained iteratively until the learning loss is less than a threshold value indicative of at least one of a high learning score or end of the training. Such a training process considering the learning losses to create a final ML model is discussed in conjunction with FIG. 3.

In an embodiment, the object detection module may include an execution block 214. The execution block 214 may receive as input an input image 216 with multiple UI elements. The input image 216 may be processed using a deep/machine learning model 218 and any changes, gaps or inconsistences observed in the output image with respect to the input image may be determined. The determined changes, gaps or inconsistences may be presented in test results at block 222. The test results may be prepared based on a customized benchmark set for detection of gaps, inconsistences reported. The deep/machine learning model 218 may be the machine learning model trained with the training module 202.

As previously discussed, the input image may be analyzed to detect the UI elements such as a radio button being present but not selected in the output image with respect to a selected radio button present in the input image, a checkbox present in the output image corresponding to a radio button present in the input image, and the like. With respect to the input image 216, the output image 220 may have UI elements related to vibration intensity as a radio button representing strong and having a detection accuracy of 97%, a selected radio button representing medium and having a detection accuracy of 98%, a radio button representing low and having a detection accuracy of 97%, and a selected check box having lighting elements and having a detection accuracy at 99%.

Referring to FIG. 3 a low level design 300 of an object detection module of an HMI Validation Framework is illustrated in accordance with an embodiment of the present disclosure. FIG. 3 depicts an example architecture for creating the trained machine learning model which is robust and accurate to perform the HMI validation. The data blocks and the corresponding functions/services disclosed herein may be executed by the machine learning processor 101 as a part of the training process. According to an embodiment, a tensor flow data block 302 may include receiving a collection of images 304 from a data storage 340. The collection of images may be test images and training images. After collection of these images at 304, the training images may be segregated at block 306. Next, a data labelling service may be performed at 308 followed by creating a tensor flow records (for example, .record files) at 310. For example, the machine learning processor 101 may segregate the images based on geographical regions such as US, Europe, Asia, etc. For example, the images with a blue color theme may be classified and labelled as US region-based HMI screen and the images with orange color theme may be classified and labelled as EP region and so on. In this regard, the tensor flow records may be created by using the labelled images. It is understood by a person skilled in the art that TensorFlow is a free and open-source software library for machine learning and artificial intelligence. It may be used across a range of tasks but has a particular focus on training and inference of deep neural networks.

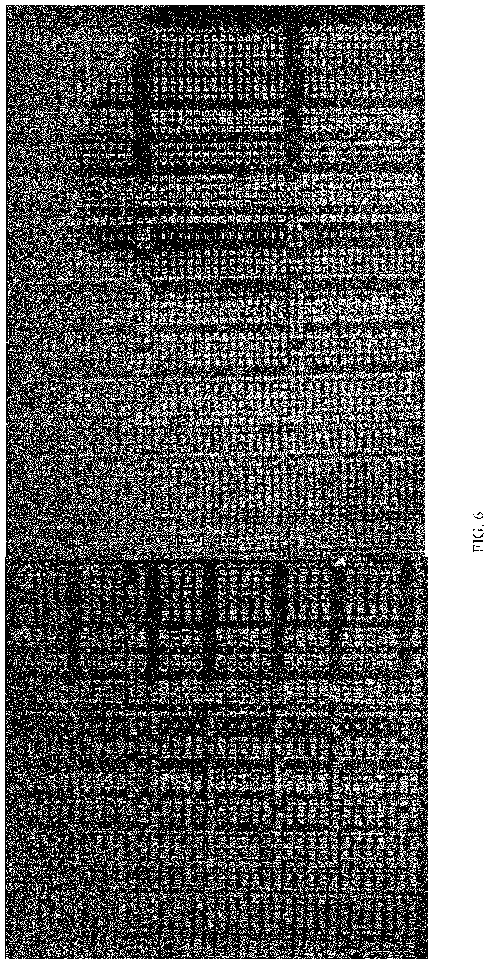

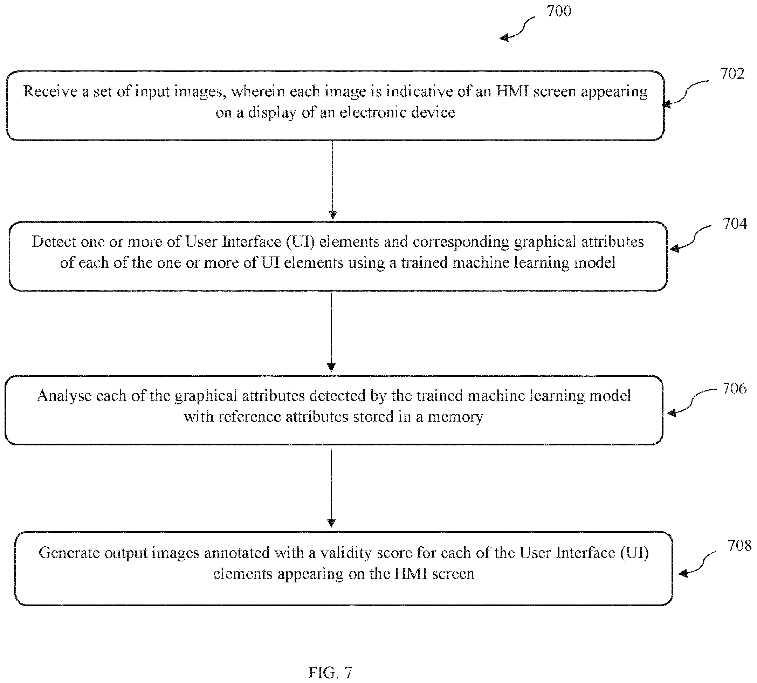

According to an embodiment, training of the machine learning model begins at block 312 with tensor flow record files. For example, the training may include selecting a pretrained model (for example, a faster R-CNN model) at 314 to execute the files. Further, in some examples, configuration of the machine learning model may be performed as per (Original Equipment Manufacturer) OEM's requirement at 316. For example, the requirement may be specified at the execution input block 104 as shown in FIG. 1. In this regard, the machine learning model may be trained by the machine learning processor 101 with the tensor flow data at 318 according to the OEM's requirement. According to an embodiment, the machine learning model may be trained iteratively for a number of iteration and the learning loss may be recorded for each iteration at block 320. For example, the learning loss may be calculated while the tensor flow date is being executed at each step of execution by the machine learning model. FIG. 6 illustrates an example of the execution steps while performing the training of the machine learning model using the tensor flow records. It is seen that at each execution step, the learning loss is calculated. For example, at step 968, the learning loss is 0.3253 then at step 976, the learning loss is 0.2578, later at step 979, the learning loss is 0.0337. Likewise, after the execution of each step, the learning loss is calculated to assess if the machine learning model is fully trained and ready to be deployed for the HMI validation. Further, for testing the model at 322, the machine learning processor 101 selects the execution step at which the learning loss is less than a benchmark value. When the learning loss is less than the benchmark value then it is an indication of a high learning score for the machine learning model. According to an embodiment, the number of training iterations for the machine learning model may be based on the learning score or the learning loss. For example, if the benchmark value is set to 0.05, then the machine learning processor 101 may compare the current learning loss to the benchmark value. As shown in FIG. 7, the current learning loss at step 976 appears to be 0.2578 which is more than the benchmark value. In such scenarios, the training of the machine learning model is continued until the learning loss is less than the benchmark value. As shown in FIG. 7, the current learning loss at step 979 appears to be 0.0337 which is less than the benchmark value. In such scenarios, the training of the machine learning model is stopped indicating that the machine learning model is well trained to be deployed in HMI validating testing environment. In other words, the machine learning model is trained to receive the actual images which are a part of the test cases. In this regard, a customized DL/ML model may be created at block 324. Further, the created DL/ML model may be tested with actual images at block 326 and an obtained result at block 328 may be examined. If the result obtained is not satisfactory the flow may be directed to the block 318, where the model is trained again in an iterative manner with the tensor Flow data. Else if the result is satisfactory, a final trained ML/DL model may be created at block 330. In some examples, the obtained result may be examined with the reference attributes stored in the memory and the result may be populated as an HTML test report and stored in the memory in a like manner as described in conjunction with FIG. 1, 5A and 5B. In some examples, the result may be classified as satisfactory and not satisfactory by comparing the validity score against a predefined threshold value. For example, of the validity score is 50% but the predefined threshold value is 80%, then the result may be not satisfactory, and the model may be subjected to further training.

According to an embodiment, for execution block 332, an input image at 334 may be received by the machine learning processor 101, then analyzed and executed with the trained machine learning model 336 to generate results at block 338. The generated results at block 338 may be maintained at the dataset storage 340 for future use and reference or may be published in the form of the HTML test report.

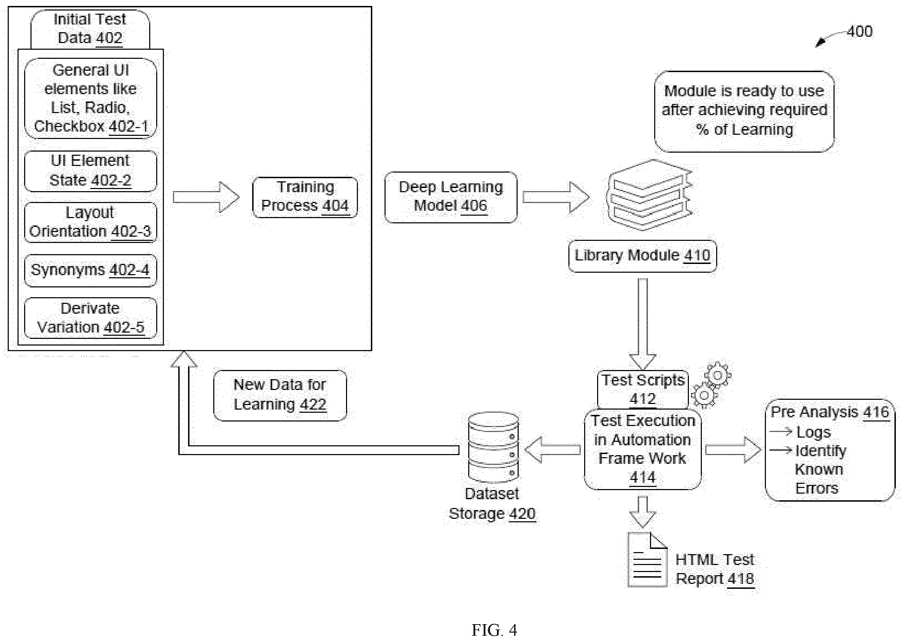

Referring to FIG. 4, at 400, deployment of an exemplary object detection module for performing HMI automation testing is illustrated, in accordance with an embodiment of the present disclosure. With reference to FIG. 4, an initial test data 402 may include general UI elements such as a list, a radio button, a checkbox 402-1, a UI element state 402-2, a layout orientation 402-3, synonyms 402-4, derivate variation 402-5, and the like. The initial test data 402 may be fed to a training process 404. A deep/machine learning module 406 may use the training process 404 and a library module 410. The library module 410 may be ready to be used after achieving required percentage of learning with reduced learning losses. The deep/machine learning model 406 may use the library module 410 to produce test scripts 412 that are used for test execution in an automation framework 414. The test execution in the automation framework 414 may create a pre-analysis results block 416 and an HTML test report 418. The pre-analysis results may include assets such as logs, identified known errors and the like. The test execution results in the automation framework 414 may be maintained in a data storage 420 and may be used for improving training of existing data to create new data used for learning at 422.

The present disclosure may train an ML model to test graphical portions of the HMI screen and verify each of testing aspects (i.e., functional testing and graphical testing) in isolation. The HMI automation testing facilitates the ML model to segregate minor graphical issues and move ahead with functional testing. Such testing may ignore minor graphical bugs while verifying functionality and maintaining focus on graphical details only while verifying and validating the graphical portions. Using the trained ML model, analysis time and a rate of false failure cases is reduced. Using the trained ML model, the UI elements may be detected on a dynamic background. In addition, the model facilitates to detect live 3D objects and moving 3D objects.

Referring to FIG. 7 a flowchart of a method 600 for performing HMI automation testing is provided, in accordance with an embodiment of the present disclosure. As illustrated in Figure 7, the method 600 includes one or more blocks illustrating a method for performing HMI testing. The method 300 may be described in the general context of computer executable instructions. Generally, computer executable instructions may include routines, programs, objects, components, data structures, procedures, modules, and functions, which perform specific functions or implement specific abstract data types.

The order in which the method 700 is described is not intended to be construed as a limitation, and any number of the described method blocks may be combined in any order to implement the method. Additionally, individual blocks may be deleted from the methods without departing from the spirit and scope of the subject matter described.

According to an embodiment, the testing of the Human Machine Interface (HMI) is performed by a machine learning processor in conjunction with a trained machine learning model. The machine learning model may be trained by the machine learning processor to be used in the HMI testing. The machine learning processor is communicably coupled to a memory to read, analyze, and execute test scripts for testing the HMI screens. Further, the machine learning processor is communicably coupled to a dataset storage to read, analyze, and execute inputs, software programs and outputs to train the machine learning model. In this regard, at step 702, the machine learning processor, may receive one or more input images for testing from the memory or the dataset storage or from any other electronic device communicably coupled to the machine learning processor using one or more communication channels. The one or more input images is indicative of the HMI screen appearing on a display of the electronic device. According to an embodiment, the machine learning processor may receive additional inputs from the execution input block. The execution input block specifies an execution type comprising one of a functional type, a legacy type, a theme-dependent type, a theme-independent type, validation type including status bar validation, language type, or release region.

At step 704, the machine learning processor may detect one or more of User Interface (UI) elements on the HMI screen and corresponding graphical attributes of each of the one or more of UI elements using the trained machine learning model. The graphical attributes comprise at least one of an appearance and a placement of each of the one or more of UI elements. For example, the appearance may include color, theme, size of the radio button or check box, etc. For example, any attribute in the HMI screen which enhances the look and feel of the one or more UI elements may be considered as a graphical attribute. For example, the placement may specify a position (i.e., 2D or 3D coordinates) of the UI element on the HIM screen. For example, the position (i.e., the 2D or 3D coordinates) of the radio button or the check box or the text with respect to the check box. At step 706, the machine learning processor analyzes each of the graphical attributes detected by the trained machine learning model with reference attributes stored in the memory. In some examples, the reference attributes exist in the form a reference template comprising reference condition to validate the HMI screen and the one or more UI elements associated with the HMI screen. For example, the reference templates may be in the form an image or a .xlsx file which specifies the reference conditions for each UI element. For example, the reference condition may specify "UI element- radio button state"-conditions: 1. Strong: Selected; 2. Medium: Unselected; 3. Low: Selected and "UI element-Drop-down option"- condition: 1. Vibration intensity: Unselected. Likewise, each UI element may have specified set of reference conditions. In this regard, the machine learning model may check the validity of the each of the graphical attributes by comparing it with the reference attributes. In some examples, expected UI elements and attributes are stored as the reference attributes in the memory. The actual UI elements and attributes in the input images are detected by the trained machine learning model and analyzed by comparing it with the reference attributes to validate the HMI screen.

At step 708, in response to the analysis, the machine learning processor may generate an output image annotated with a validity score for each of the User Interface (UI) elements appearing on the HMI screen. The validity score is indicative of a closeness of User Interface (UI) elements detected in the output image to the User Interface (UI) elements of the at least one input image. For example, a comparative matching of each of the UI elements with the reference attributes may generate the validity score to determine percentage accuracy when compared to the input image provided to the trained machine learning model. For example, the validity score may indicate the machine learning model's accuracy or precision in determining the UI elements and the associated attributes. For example, as shown in FIG. 1, the UI elements of the output image is annotated with the validity score provided in form of percentage. The "Strong" radio button was detected by the machine learning model with 97% accuracy. Further, "lighting elements" check box in the selected sate was detected by the machine learning model with 99% accuracy. Likewise, each UI element may be annotated with the validity score expressed in terms of a percentage valve indication the detection accuracy of the trained machine learning model. According to an embodiment, the machine learning processor may execute an autocalibration mode to analyze a new image or a failed image which is put from the trained machine learning model distinct from the set of input images provided to the machine learning model for the HMI testing. The machine learning processor may then train the machine learning model with the new image or the failed image such that the model learns these images when performing subsequent HMI testing. According to an embodiment, analyzing, by the machine learning processor, a set of failed images and classifying the error according to the rules set by the rule set block. The rule set block includes rules such as synonymous of text, missing UI element icon, text missing of UI element, corrupt image, change in position, change in UI element structure. These rules may appear as a description for the test cases which failed during the HMI testing. For example, testcase_004 failed due to missing UI element icon.

According to an embodiment, the machine learning processor creates the machine learning model by iteratively training the machine learning model with a set of training images. The set of training images include training images and test images. According to an embodiment a tensor flow record is created by segregating and labelling the set of training images. The tensor flow record (. Record files) are executed using a convolution neural network (i.e., using a Faster-R-CNN) and based on OEM's requirement to iteratively train the machine learning model. A number of training iteration to train the machine learning model is based on a learning score indicative of valid recognitions of the one or more UI elements and the corresponding graphical attributes. The learning score is indicative of a learning loss encountered when training the model. If it is identified that the model is subjected to less learning loss when training the model, then the learning score is high and such a model may be deployed in the HMI testing. In some examples, the model may be trained iteratively until the learning loss is less than a threshold value indicative a high learning score. When the learning loss is less than the threshold value then it is an indication of a high learning score for the machine learning model or an end of the training. According to an embodiment, the number of training iterations for the machine learning model may be based on the learning score or the learning loss. Such a training process considering the learning losses is to create the trained ML model. According to an embodiment, the machine learning model may be trained iteratively until the learning loss is less than the benchmark value. The learning loss being less than the benchmark value indicates at least one of a high learning score or end of the training. Therefore, the trained machine learning model may be utilized to test the validity of one or more UI elements and associated graphical attributes of any HMI screens.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein. The hardware used to implement the various illustrative logics, logical blocks, modules, and circuits described in connection with the aspects disclosed herein may include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively or additionally, some steps or methods may be performed by circuitry that is specific to a given function.

In one or more example embodiments, the functions described herein may be implemented by special-purpose hardware or a combination of hardware programmed by firmware or other software. In implementations relying on firmware or other software, the functions may be performed as a result of execution of one or more instructions stored on one or more non-transitory computer-readable media and/or one or more non-transitory processor-readable media. These instructions may be embodied by one or more processor-executable software modules that reside on the one or more non-transitory computer-readable or processor-readable storage media. Non-transitory computer-readable or processor-readable storage media may in this regard comprise any storage media that may be accessed by a computer or a processor. By way of example but not limitation, such non-transitory computer-readable or processor-readable media may include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media may be referred to herein as a computer program product.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the supply management system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method of performing a Human Machine Interface (HMI) testing, said method comprising:
receiving 802, by a machine learning processor 101, a set of input images, wherein each image is indicative of an HMI screen appearing on a display of an electronic device;
detecting 804, by the machine learning processor 101, one or more of User Interface (UI) elements and corresponding graphical attributes of each of the one or more of UI elements using a trained machine learning model, wherein the graphical attributes comprise at least one of an appearance and a placement of each of the one or more of UI elements; and
analysing 806, by the machine learning processor 101, each of the graphical attributes detected by the trained machine learning model with reference attributes stored in a memory, wherein in response to the analysis:
generating 810, by the machine learning processor 101, output images annotated with a validity score for each of the User Interface (UI) elements appearing on the HMI screen, wherein the validity score is indicative of a closeness of User Interface (UI) elements detected in the output images to the User Interface (UI) elements of the set of input images; and
wherein the trained machine learning model is created by iterative training with a set of training images and test images, and wherein a number of training iteration is based on a learning score indicative of valid recognitions of the one or more UI elements and the corresponding graphical attributes.

2. The method of claim 1, wherein the trained machine learning model is one of an object detection machine learning model or an Optical character Recognition (OCR) machine learning model.

3. The method of claim 2, wherein the graphical attributes are detected by the object detection machine learning model and text attributes are detected by the OCR machine learning model.

4. The method of claim 2, further comprising: detecting, by the machine learning processor 101, texts in the first language associated with the set of input images and the text in the second language associated with a set of training using the trained OCR machine learning model.

5. The method of claim 1, further comprising:
executing, by the machine learning processor 101, an autocalibration mode to analyse a new image or a failed image distinct from the set of input images provided to the machine learning model for the HMI testing; and
training, by the machine learning processor 101, the machine learning model with the new image or the failed image.

6. The method of claim 1, further comprising: analyzing, by the machine learning processor101, a set of failed images and classifying the error according to the rules set by the rule set block 116, wherein the rule set block 116 comprise rules such as synonymous of text, missing UI element icon, text missing of UI element, corrupt image, change in position, change in UI element structure.

7. The method of claim 1, further comprising: receiving, by the machine learning processor 101, additional inputs from the execution input block 104, wherein the execution input block 104 specifies an execution type comprising one of a functional type, a legacy type, a theme-dependent type, a theme-independent type, validation type including status bar validation, language type, or release region.

8. The method of claim 1, wherein the learning score is indicative of a learning loss encountered when training the machine learning model.

9. The method of claim 1, further comprising: training, by the machine learning processor 101, the machine learning model iteratively until the learning loss is less than the benchmark value, wherein the learning loss is less than the benchmark value indicates at least one of a high learning score or end of the training.

10. The method of claim 1, further comprising: creating, by the machine learning processor 101, a tensor flow record by segregating and labelling the set of training images.

11. The method as claimed in claim 1, wherein the set of input images or the set of testing and training images comprises one or more two-dimensional images or one or more three-dimensional images, or a combination thereof.

12. A computing device with 100 a machine learning processor 101 is disposed in the computing device and communicably coupled to a memory, a trained machine learning model and a dataset storage 122, wherein the machine learning processor 101 is configured to:
receive at least one input image, wherein the at least one input image is indicative of an (Human Machine Interface) HMI screen;
detect at least one User Interface (UI) element and a corresponding graphical attribute using the trained machine learning model, wherein the graphical attribute comprises a placement coordinate of the at least one UI element; and
analyse the graphical attribute detected by the trained machine learning model with a reference attribute stored in the memory, wherein in response to the analysis:
generate an output image annotated with a validity score for the User Interface (UI) element appearing on the HMI screen, wherein the validity score is indicative of a closeness of User Interface (UI) element detected in the output image to the User Interface (UI) element of the at least one input image; and
wherein the trained machine learning model is created by iterative training with a set of training images from the dataset storage 122, wherein a number of training iteration is based on a learning score, and wherein the learning score is indicative of a learning loss encountered during the iterative training.

13. The computing device of claim 12, wherein the trained machine learning model is one of an object detection machine learning model or an Optical character Recognition (OCR) machine learning model.

14. The computing device of claim 12, wherein the graphical attributes are detected by the object detection machine learning model and text attributes are detected by the OCR machine learning model.

15. The computing device of claim 12, wherein the machine learning processor 101 is further configured to: train the machine learning model iteratively until the learning loss is less than the benchmark value, wherein the learning loss is less than the benchmark value indicates at least one of a high learning score or end of the training.
